# EUROPÄISCHE PATENTSCHRIFT

(11) **EP 1 646 546 B1**
(45) Veröffentlichungstag und Bekanntmachung des Hinweises auf die Patenterteilung: **04.03.2009**
(21) Anmeldenummer: 04762441.6
(22) Anmeldetag: 22.07.2004
(51) Int. Cl.: B62D 1/19

(54) **DEFORMATIONSANORDNUNG FÜR LENKSTRANG**
DEVICE FOR DEFORMING A STEERING SYSTEM
DISPOSITIF DE DEFORMATION POUR SYSTEME DE DIRECTION

(30) Priorität: 23.07.2003 DE 10333748
(43) Veröffentlichungstag der Anmeldung: 19.04.2006
(73) Patentinhaber: ZF Lenksysteme Nacam GmbH, 28259 Bremen (DE)
(72) Erfinder: GRAMS, Kay-Uwe, 49692 Cappeln (DE); MICHALSKI, Herniu, 28816 Brinkum (DE); SCHÄFER, Burkhard, 27777 Ganderkesee (DE); SCHMIDT, Rainer, 49356 Diepholz (DE)
(86) Internationale Anmeldenummer: PCT/DE2004/001591
(87) Internationale Veröffentlichungsnummer: WO 2005/009825

(56) Entgegenhaltungen:
- DE-A- 2 232 836
- DE-A- 19 833 421
- US-A- 3 428 150
- PATENT ABSTRACTS OF JAPAN Bd. 1996, Nr. 07, 31. Juli 1996 (1996-07-31) -& JP 08 072727 A (NIPPON SEIKO KK), 19. März 1996 (1996-03-19)

## Beschreibung

Die Erfindung betrifft eine Deformationsanordnung, insbesondere für die Lenksäule bzw. den Lenkstrang eines Kraftfahrzeuges, gemäß dem Oberbegriff des Patentanspruchs 1.

Deformationsanordnungen der eingangs genannten Art kommen beispielsweise, jedoch keineswegs ausschließlich, bei Lenksäulen von Kraftfahrzeugen zum Einsatz, und dienen einerseits der Absorption bei einem Fahrzeugcrash anfallender kinetischer Energie. Andererseits sollen gattungsgemäße Deformationsanordnungen verhindern, dass Teile des Lenkstrangs bzw. das Lenkrad aufgrund bei einem Crash auftretenden Verformungen der Fahrzeugstruktur in den Fahrgastraum eindringen und zu Verletzungen des Fahrers führen.

Eine derartige Deformationsanordnung ist beispielsweise aus der DE 198 33 421 C2 bekannt. Diese bekannte, einen Teil des Lenkstrangs eines Kraftfahrzeuges bildende Deformationsanordnung umfasst ein Mantelrohr und ein konusartiges Bauteil, wobei das konusartige Bauteil bei einem Fahrzeugcrash unter Aufweitung des Mantelrohrendes in das Mantelrohr eindringen kann. Bei entsprechend tiefem Eindringen des konusartigen Bauteils in das Mantelrohr vermag das Mantelrohr entlang von Sollbruchstellen aufzureißen, die durch nutenförmige Materialabschwächungen gebildet werden, wonach das Mantelrohr aufgrund einer besonderen Formgebung des konusartigen Bauteils streifenweise aufgerollt wird. Durch den Vorgang des Aufweitens, Aufreißens und Aufrollens wird kinetische Energie definiert dissipiert, bzw. es werden crashbedingte Verformungswege im Lenkstrang definiert aufgefangen, ohne dass Teile des Lenkstrangs oder das Lenkrad in den Fahrgastraum eindringen.

Für das ordnungsgemäße Funktionieren derartiger Deformationsanordnungen ist unter anderem die Höhe der Losbrechkraft der als Presssitz ausgeführten Verbindung zwischen Konus und Mantelrohr entscheidend. Diese Losbrechkraft darf bestimmte, beispielsweise von der Art der Verankerung des Konus am Cockpit bzw. von physiologischen Gegebenheiten des menschlichen Oberkörpers abhängige maximale Werte keinesfalls überschreiten. Andernfalls drohen schwere Verletzungen des Fahrers, beispielsweise aufgrund Eindringens des Lenkrades in den Fahrgastraum bzw. aufgrund unzulässig hoher Widerstandskräfte des Lenkrades beim Aufprall des Oberkörpers oder des Kopfes auf das Lenkrad. Für die Dimensionierung des Presssitzes zwischen Konus und Mantelrohr ist die maximal zulässige Losbrechkraft somit einer der maßgeblichen Faktoren.

Mit der so zwangsläufig begrenzten Dimensionierung der Pressverbindung zwischen Konus und Mantelrohr ergibt sich jedoch automatisch auch eine Begrenzung der maximal zwischen Konus und Mantelrohr per Reibschluss übertragbaren Drehmomente. Unter bestimmten Umständen ist es bei unveränderter Höhe der Losbrechkraft zwischen Konus und Mantelrohr in axialer Richtung jedoch wünschenswert, höhere Drehmomente zwischen Mantelrohr und Konus übertragen zu können. Dies ist beispielsweise dann der Fall, wenn das Mantelrohr zur torsionalen Stabilisierung von weiteren am Konus bzw. an der oberen Lenksäule angeordneten Baugruppen herangezogen werden soll.

Ein anderer Fall, bei dem es auf die Übertragung von hohen Drehmomenten zwischen Mantelrohr und Konus ankommt, ist der Einsatz einer derartigen Deformationsanordnung beispielsweise in der Lenkzwischenwelle, wobei dann das Mantelrohr sowohl die Aufgabe der Verformung und Energieaufnahme bei einem Crash als auch die Aufgabe der Drehmomentübertragung für Lenkbewegungen im normalen Betrieb des Fahrzeugs übernimmt. Ein weiterer Gesichtspunkt in Bezug auf die Übertragung erhöhter Drehmomente liegt in der zunehmenden Verbreitung von elektrischen Servolenkungen, deren Antrieb oftmals nicht mehr im Bereich des Lenkgetriebes, sondern vielmehr im Bereich der oberen Lenksäule angeordnet ist. Hierdurch muss nicht mehr nur das von Fahrer aufgebrachte, sondern das gesamte Lenkmoment ständig über den größten Teil des Lenkstrangs übertragen werden, was ebenfalls erhöhte Anforderungen an die Torsionsfestigkeit der Verbindung zwischen Konus und Mantelrohr stellt.

Eine die Übertragung von Drehmomenten gewährleistende Deformationsordnung ist in der DE 22 32 836 A (D1) gezeigt. Zwei ineinander gefügte Rohre, wobei das innere Rohr mit einer stärkeren Wandung versehen ist, sind mittels einer formschlüssigen Verbindung drehfest zueinander ausgebildet und können so Drehmomente übertragen. Der Bereich der formschlüssigen Verbindung zwischen den Rohren, welcher durch Deformationen der Rohre gebildet ist, befindet sich beabstandet zu den jeweiligen Enden der Rohre innerhalb ihrer Längserstreckung. In einem Crashfall wird das innere Rohr in das äußere Rohr hinein verschoben, so dass eine Relatiwerschiebung der beiden Rohre stattfindet. Dabei wird das äußere Rohr aufgeweitet. Nachteilig ist hier insbesondere, dass der relative Verschiebeweg jeweils am inneren und äußeren Rohr als Bauraum vorgehalten werden muss.

Mit diesem Hintergrund ist es die Aufgabe der vorliegenden Erfindung, eine Deformationsanordnung zu schaffen, mit der sich die genannten Nachteile überwinden lassen. Die Deformationsanordnung soll dabei insbesondere zur Übertragung hoher Drehmomente geeignet sein, ohne dass hierdurch die das Crashverhalten bestimmenden Parameter der Deformationsanordnung beeinflusst oder gar beeinträchtigt werden.

Diese Aufgabe wird durch eine Deformationsanordnung mit den Merkmalen des Patentanspruchs 1 gelöst.

Bevorzugte Ausführungsformen sind Gegenstand der Unteransprüche.
Die Deformationsanordnung gemäß der vorliegenden Erfindung weist in an sich bekannter Weise ein Deformationsrohr auf, das zumindest an einem seiner Enden definiert verformbar gestaltet ist. Die Verformung kann dabei beispielsweise, jedoch keineswegs ausschließlich, durch Umstülpen, Aufweiten und/oder Aufreißen erfolgen. In ebenfalls bekannter Weise weist die Deformationsanordnung zumindest einen dem verformbaren Ende des Deformationsrohrs zugeordneten Deformierkonus auf, durch dessen Eindringen in das Deformationsrohr im Crashfall die Verformung des Deformationsrohrs bewirkt wird. Zur Übertragung von Drehmomenten ist dabei der Deformierkonus teilweise kraftschlüssig in das Ende des Deformationsrohr eingepresst.

Erfindungsgemäß zeichnet sich die Deformationsanordnung jedoch dadurch aus, dass der Deformierkonus zumindest eine im wesentlichen entlang seiner Mantellinien angeordnete Erhebung bzw. Ausnehmung aufweist. Dabei stehen durch die Konuserhebung bzw. Konusausnehmung gebildete, ebenso entlang von Mantellinien des Konus verlaufende Kanten mit den Kanten formkorrespondierender Einprägungen bzw. mit den Kanten formkorrespondierender Ausnehmungen, die am Ende des Deformationsrohrs angeordnet sind, in formschlüssigem Eingriff, wobei die Kanten der entlang der Mantellinie des Deformationskonus angeordneten Erhebung als eine das Deformationsrohr im Crashfall auftrennende Schneide ausbildet sind.

Dies bedeutet zunächst einmal, dass die Verbindung zwischen Deformationsrohr und Deformierkonus nunmehr als Kombination aus Kraftschluss und Formschluss vorliegt, wobei jedoch die Kraftschluss bzw. Formschluss bestimmenden Merkmale bzw. Parameter unabhängig voneinander gestaltet bzw. dimensioniert werden können. Insbesondere kann der nach wie vor für das Crashverhalten bestimmende Kraftschluss bzw. Presssitz zwischen Deformierkonus und Deformationsrohr nun vollkommen unabhängig von der gewünschten Torsionsfestigkeit der Verbindung zwischen Deformierkonus und Deformationsrohr eingestellt werden, da hohe Drehmomente, die über die mittels Kraftschluss übertragbaren Kräfte hinausgehen, ohne weiteres über den zusätzlich vorhandenen Formschluss übertragen werden können. Des Weiteren kann durch die als Schneiden wirkenden Kanten der entlang der Mantellinie des Deformationskonus angeordneten Erhebung das kontrollierte Auftrennen und Verformen des Deformationsrohres im Crashfall unterstützen.

Es ist für das Wesen der Erfindung nicht entscheidend, durch welche Elemente des Deformierkonus bzw. des Deformationsrohrs die zueinander formkorrespondierenden Kanten dieser beiden Teile gebildet werden, solange sich damit zusätzlich zum vorhandenen Kraftschluss eine sichere Drehmomentübertragung mittels Formschluss gewährleisten lässt. Gemäß einer bevorzugten Auführungsform der Erfindung werden jedoch die Erhebungen des Deformierkonus durch einen *n*-seitigen pyramidenstumpfförmigen Bereich des Deformierkonus gebildet. Dies bedeutet, dass die hierzu formkorrespondierenden Kanten des Deformationsrohrs - im einfachsten Fall beim Aufpressen des Deformationsrohrs auf den Deformierkonus - dadurch gebildet werden, dass der pyramidenstumpfförmige Bereich des Deformierkonus das Deformationsrohr ebenfalls pyramidenstumpfförmig umformt. Ebenso gut kann das Ende des Deformationsrohrs jedoch bereits im Vorfeld der Montage von Deformationsrohr und Deformierkonus innenseitig entsprechend umgeformt sein.

Diese Ausführungsform besitzt neben ihrer besonders großen Einfachheit den zusätzlichen Vorteil, dass die durch den pyramidenstumpfförmigen Bereich des Deformierkonus gebildeten Kanten bzw. Flächen neben ihrer Funktion als formschlüssig drehmomentübertragende Elemente außerdem auch als Schneiden bzw. Führungsflächen wirken, die das kontrollierte Auftrennen und Verformen bzw. Aufwickeln des Deformationsrohrs im Crashfall unterstützen.

Die Wirkung der Schneiden des pyramidenstumpfförmig gestalteten Bereichs des Deformierkonus in Bezug auf Drehmomentübertragung und Steuerung des Crashverhaltens kann außerdem, wie dies gemäß einer weiteren bevorzugten Ausführungsform der Erfindung vorgesehen ist, zusätzlich durch am Deformationsrohr längs angeordnete nutenförmige Materialschwächungen, die ebenfalls dem kontrollierten Aufreißen und Verformen des Deformationsrohrs dienen, wirksam unterstützt werden. Über Variationen der Wanddicke des Deformationsrohrs und über Variationen der Anzahl und Anordnung der Materialschwächungen lässt sich dabei das Verhalten der Deformationsanordnung in weitem Bereich an die zu erwartenden Beanspruchungen anpassen.

Ebenso ist es jedoch auch möglich, ein Deformationsrohr ganz ohne die genannten nutenförmigen Materialschwächungen einzusetzen, da die Kanten und Flächen des pyramidenstumpfförmigen Bereichs, im Unterschied zum Stand der Technik, auch ohne weitere Maßnahmen für ein kontrolliertes Aufschneiden und Verformen des Deformationsrohrs im Crashfall sorgen.

Gemäß einer weiteren Ausführungsform der Erfindung werden die zu den Kanten der Erhebungen des Deformierkonus fonnkorrespondierenden Kanten des Deformationsrohrs durch entlang von Mantellinien des Deformationsrohrs verlaufende, am Ende des Deformationsrohrs eingebrachte kurze Einschnitte gebildet. Diese Einschnitte werden vor dem endseitigen Aufweiten des Deformationsrohrs eingebracht, so dass die Einschnitte durch das anschließende Aufweiten des Deformationsrohrs zu V-förmigen Ausnehmungen mit jeweils zwei Kanten werden, in die wiederum die Kanten entsprechender Erhebungen des Deformierkonus eingreifen können.

Dies ist vorteilhaft insofern, als die zur Drehmomentübertragung notwendigen Kanten des Deformationsrohrs so auf äußerst einfache Weise erzeugt werden können.

Gemäß einer weiteren bevorzugten Ausführungsform der Erfindung sind die zur Drehmomentübertragung dienenden Kanten des Deformationsrohrs durch in das Innere des Deformationsrohrs weisende, abgekantete Laschen gebildet, die im Bereich zumindest einer endseitigen Ausklinkung des Deformationsrohrs angeordnet sind. Dabei kann die Ausklinkung entweder offen am Ende des Deformationsrohrs oder aber auch mit geschlossenem Umfang im Bereich des Endes des Deformationsrohrs angeordnet sein. Insbesondere eine geschlossene Ausklinkung besitzt dabei den Vorteil, besonders hohe Drehmomente übertragen zu können.
Die abgekanteten Laschen greifen in entsprechende, formkorrespondierende Ausnehmungen des Deformierkonus ein, wodurch wiederum die Drehmomentübertragung zwischen Deformationsrohr und Deformierkonus ermöglicht wird. Neben den im wesentlichen in Längsrichtung des Deformationsrohrs verlaufenden Kanten, die zur Drehmomentübertragung dienen, können die abgekanteten Laschen jedoch auch weitere Kanten aufweisen, die beispielsweise in Umfangsrichtung des Deformationsrohrs verlaufen. Auf diese Weise kann die Befestigung des Deformierkonus im Deformationsrohr zusätzlich gegen unerwünschtes Herausziehen des Deformierkonus aus dem Deformationsrohr in axialer Richtung gesichert werden.

Zur zusätzlichen, besonders exakten Steuerung der Verformung des Deformationsrohrs im Crashfall kann der Deformierkonus, wie dies gemäß einer weiteren bevorzugten Ausführungsform der Erfindung vorgesehen ist, einen sich trompetenförmig oder torusförmig erweiternden Querschnittbereich umfassen. Durch den trompetenförmigen oder torusförmigen Verlauf der Oberfläche des Deformierkonus lässt sich erreichen, dass das in einem Crashfall durch die Kanten oder Schneiden des Deformierkonus in Längsstreifen aufgetrennte Deformationsrohr kontrolliert dergestalt umgeformt wird, dass die Streifen zu verhältnismäßig engen Spiralen aufgewickelt werden. Hierdurch lässt sich die durch die Verformung des Deformationsrohrs dissipierte mechanische Energie besonders exakt dimensionieren, außerdem verhindert das kontrollierte Aufwickeln der abgetrennten Streifen des Deformationsrohrs die Entstehung von Gefahren durch die schnelle Bewegung der scharfkantigen Metallstreifen.

Der Deformierkonus kann außerdem, wie dies gemäß einer weiteren Ausführungsform der Erfindung vorgesehen ist, auch einen Lagersitz zur Aufnahme einer Lagerung für die Lenkwelle umfassen. Dies ermöglicht einerseits eine Reduzierung der im Bereich der Lenksäule notwendigen Bauteileanzahl. Andererseits können auf diese Weise die im Crashfall, beispielsweise durch Aufprall des Oberkörpers auf das Lenkrad, entstehenden hohen Kräfte unmittelbar in den Deformierkonus eingeleitet werden, wo sie sich durch Verformung des Deformationsrohrs unschädlich machen lassen.

Die Deformationsanordnung gemäß der vorliegenden Erfindung lässt sich neben der Anwendung im oberen Teil der Lenksäule außerdem auch beispielsweise in der Lenkzwischenwelle einsetzen. Hierzu ist es gemäß einer weiteren Ausführungsform der Erfindung vorgesehen, dass der Deformierkonus eine Gabel eines Kardangelenks der Lenkwelle umfasst. Dies bedeutet mit anderen Worten, dass sowohl das Deformationsrohr als auch der Deformierkonus auf diese Weise eine Doppelfunktion verfüllen, indem sie sowohl der Energieaufnahme im Crashfall als auch gleichzeitig als drehmomentübertragende Elemente im Lenkstrang, für den Normalbetrieb der Lenkung dienen.

Die erfindungsgemäße Deformationsanordnung lässt sich mit einer ähnlichen Doppelfunktion außerdem auch im oberen Teil des Lenkstrangs einsetzen. Hierzu ist es gemäß einer weiteren Ausführungsform der Erfindung vorgesehen, dass der Deformierkonus Teil des Lenkrades ist bzw. mit dem Lenkrad drehfest verbunden ist. Dabei bildet das Deformationsrohr gleichzeitig den oberen Teil der Lenkwelle.

Auf diese Weise ist es sogar denkbar, auf die bisher stets zusätzlich notwendige, äußerst aufwändige teleskopierbare obere Lenkwelle zu verzichten, da deren Aufgabe der Drehmomentübertragung nun ebenfalls durch das Deformationsrohr übernommen werden kann.

Um die Fähigkeit zur Übertragung hoher Drehmomente bzw. des kontrollierten Auftrennens des Deformationsrohrs in einem Crashfall in einzelne Streifen weiter zu verbessern, ist es gemäß einer weiteren Ausführungsform der Erfindung vorgesehen, dass die Erhebungen des Deformierkonus, deren Kanten mit dem Deformationsrohr in Eingriff stehen, Aufsätze mit im wesentlichen in konusradialer Richtung verlaufenden Kanten umfassen. Diese Aufsätze können beispielsweise, jedoch keineswegs ausschließlich, in Form von zylindrischen oder prismatischen Fortsätzen vorliegen, die sich im wesentlichen in radialer Richtung am Grund der trompetenförmigen bzw. torusförmigen Oberfläche des Deformierkonus erheben. Hierdurch wird insbesondere eine äußerst wirksame Verdrehsicherung zwischen Deformierkonus und Deformationsrohr erzielt.

Die Erhebungen des Deformierkonus können jedoch auch in Form von Aufsätzen mit im wesentlichen in konusradialer Richtung verlaufenden Schneiden vorliegen, die am Grund der trompetenförmigen bzw. torusförmigen Oberfläche des Deformierkonus angeordnet sind. Hierdurch lassen sich ebenfalls hohe Drehmomente übertragen, außerdem wird jedoch in einem Crashfall das kontrollierte Auftrennen des Deformationsrohrs in einzelne Streifen durch diese Gestaltung des Deformierkonus äußerst wirksam unterstützt.

Im Folgenden wird die Erfindung anhand lediglich Ausführungsbeispiele darstellender Zeichnungen näher erläutert. Es zeigt:
- Figur 1: in schematischer perspektivischer Darstellung eine erste Ausführungsform einer Deformationsanordnung gemäß der vorliegenden Erfindung;
- Figur 2: in einer der Figur 1 entsprechenden Darstellung den Deformierkonus der Deformationsanordnung gemäß Figur 1;
- Figur 3: eine weitere Ausführungsform einer Deformationsanordnung gemäß der vorliegenden Erfindung;
- Figur 4: die Deformationsanordnung gemäß Figur 3 in vergrößerter Ansicht;
- Figur 5: eine Deformationsanordnung für eine Lenkzwischenwelle;
- Figur 6: die Deformationsanordnung gemäß Figur 5 in vergrößerter Ansicht;
- Figur 7-9: eine weitere Ausführungsform einer Deformationsanordnung für eine Lenkzwischenwelle in verschiedenen Ansichten;
- Figur 10: eine dritte Ausführungsform einer Deformationsanordnung für eine Lenkzwischenwelle; und
- Figur 11: Teile der Deformationsanordnung gemäß Figur 10 in vergrößerter Ansicht.

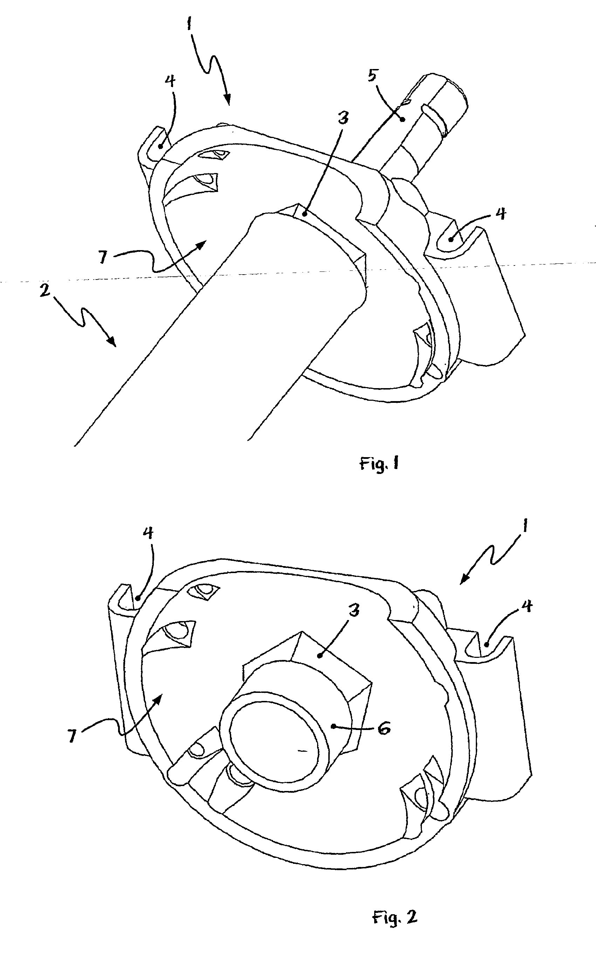

In Figur 1 ist eine erste Ausführungsform einer erfindungsgemäßen Deformationsanordnung in perspektivischer Ansicht dargestellt. Man erkennt zunächst einen Deformierkonus 1 sowie ein Deformationsrohr 2. Das Deformationsrohr 2 ist dabei auf den Deformierkonus 1 aufgepresst, wodurch der in Figur 1 nur teilweise sichtbare pyramidenstumpfförmige Bereich 3 des Deformierkonus 1 unter Aufweitung des konusseitigen Endes des Deformationsrohrs 2 in das Deformationsrohr 2 eingedrungen ist. Durch diese Aufweitung des Deformationsrohrs 2 erhält das Ende des Deformationsrohrs 2 eine leicht tulpenförmige Gestalt mit insbesondere auf seiner Innenseite durch die Kanten des pyramidenstumpfförmigen Bereichs 3 des Deformierkonus 1 eingeprägten kantenförmigen Materialschwächungen sowie mit dazwischenliegenden abgeflachten Bereichen.

Die so gebildeten zueinander jeweils formkorrespondierenden Kanten bzw. Flächen von Deformierkonus 1 und Deformationsrohr 2 dienen der sicheren Übertragung auch höherer Drehmomente, die über die lediglich per Presssitz übertragbaren Drehmomente weit hinausgehen können. Derart hohe Drehmomente können im Fall der in Figur 1 und 2 gezeigten Ausführungsform der Deformationsanordnung beispielsweise dadurch entstehen, dass im Crashfall ein Knie des Fahrers von unten auf das Cockpit aufschlägt und auf diese Weise eine hohe Drehmomentbelastung auf den mit der Struktur des Cockpit verbundenen Deformierkonus 1 ausübt. Zur Verbindung mit der Cockpitstruktur weist der hier gezeigte Deformierkonus 1 prismenförmige Ausnehmungen 4 auf, die beispielsweise in formkorrespondierende Vorsprünge, z. B. Rundstäbe, am Cockpit eingreifen können.

Ebenfalls in Figur 1 zu sehen ist ein Überstand der Lenkwelle 5 auf der dem Deformationsrohr 2 abgewandten Seite des Deformierkonus 1. Hier wird beispielsweise das Lenkrad mit der Lenkwelle 5 verbunden. Das obere Lager der Lenkwelle 5 ist dabei in den Deformierkonus 1 integriert, was in Figur 1 und 2 jedoch nicht dargestellt ist.

Figur 2 zeigt den Deformierkonus 1 der Deformationsanordnung gemäß Figur 1, wobei in Figur 2 das Deformationsrohr 2 zur besseren Erkennbarkeit von Form und Struktur des Deformierkonus 1 entfernt wurde. Man erkennt insbesondere den aus einem zylindrischen Bereich 6 und einem an den zylindrischen Bereich 6 anschließenden pyramidenstumpfförmigen Bereich 3 bestehenden Kontaktbereich zwischen Deformierkonus 1 und Deformationsrohr 2. Beim Zusammenbau von Deformierkonus 1 und Deformationsrohr 2 wird der zylindrischen Bereich 6 gänzlich und der pyramidenstumpfförmige Bereich 3 teilweise in das Deformationsrohr 2 eingepresst.

Dabei bildet sich zwischen dem Außendurchmesser des zylindrischen Bereichs 6 des Deformierkonus 1 und dem Innendurchmesser des Deformationsrohrs 2 eine Presspassung, die zunächst für eine stabile Verankerung zwischen Deformierkonus 1 und Deformationsrohr 2 sorgt. Größere Drehmomente, wie sie beispielsweise bei einem Fahrzeugcrash oder auch bei stoßartigen Belastungen im Bereich der Lenkstockhebel auftreten können, lassen sich jedoch durch eine Kombination aus Kraftschluss im zylindrischen Bereich 6 des Deformierkonus 1 und Formschluss im pyramidenstumpfförmigen Bereich 3 des Deformierkonus 1, jeweils zusammen mit den dementsprechenden Bereichen des Deformationsrohrs 2, aufnehmen.

Aus den Figuren 1 und 2 geht außerdem die trompetenförmige bzw. torusförmige Form 7 des äußeren Bereichs des Deformierkonus 1 hervor. In einem Crashfall werden Deformationsrohr 2 und Deformierkonus 1 durch die auftretenden Kräfte aufeinander zu geschoben. Dadurch wird das Deformationsrohr 2 auf den pyramidenstumpfförmigen Bereich 3 des Deformierkonus 1 aufgeschoben, wodurch es zunächst zusätzlich aufgeweitet wird. Bei weiterer Zunahme der Kräfte reißt das dementsprechend dimensionierte Deformationsrohr 2 im Bereich der Kanten des pyramidenstumpfförmigen Bereichs 3 des Deformierkonus 1 in Rohrlängsrichtung ein und wird so in einzelne Längsstreifen aufgetrennt. Diese Längsstreifen werden beim weiteren Eindringen des Deformationsrohrs 2 in den Deformierkonus 1 durch die der Innenseite eines Torus nachgebildete Form 7 des Deformierkonus 1 radial nach außen abgelenkt und schließlich in einzelne Spiralen aufgewickelt. Hierdurch wird ein besonders gut definierbarer, sicherer und kontrollierter Energieabbau im Crashfall ermöglicht.

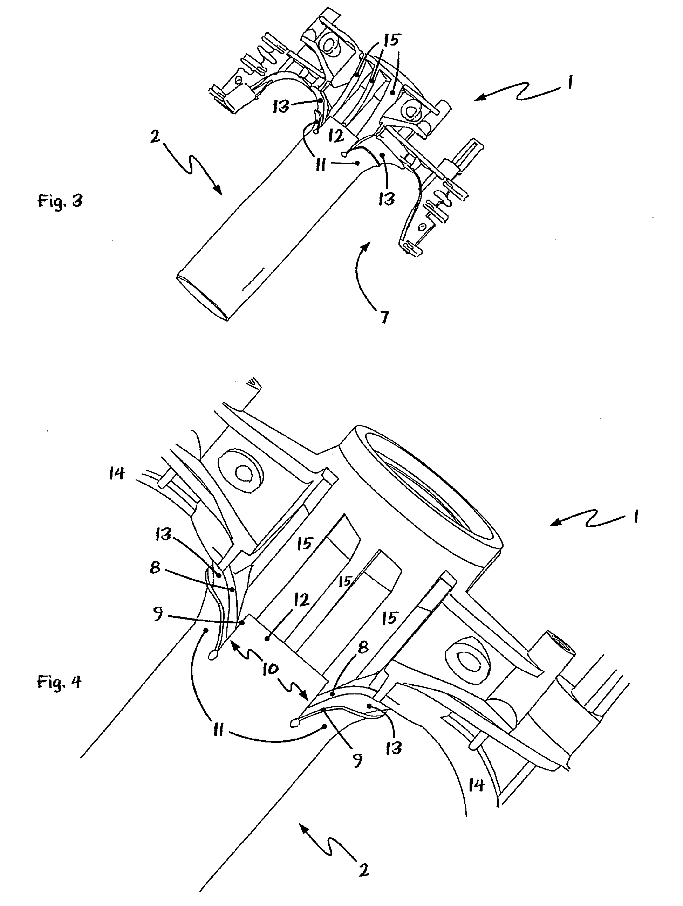

Figuren 3 und 4 zeigen eine weitere Ausführungsform einer Deformationsanordnung gemäß der vorliegenden Erfindung. Man erkennt zunächst den beispielsweise mit Anbauteilen des Cockpits verbindbaren Deformierkonus 1 sowie das auf einen zylindrischen Fortsatz des Deformierkonus 1 aufgepresste Deformationsrohr 2. Insbesondere aus der vergrößerten Darstellung der Figur 4 geht hervor, wie die formkorrespondierenden Kanten 8 bzw. 9 von Deformierkonus 1 und Deformationsrohr 2 gebildet sind und auf welche Weise diese Kanten 8 bzw. 9, eine torsionsfeste Verbindung bildend, ineinander eingreifen bzw. aneinander anliegen.

Diesbezüglich erkennt man zunächst in Längsrichtung am Endbereich des Deformationsrohrs 2 angeordnete Ausnehmungen in Form von Einschnitten 10. Durch diese Einschnitte wird eine Anzahl von Laschen 11, 12 geschaffen, die jeweils unterschiedlichen Bereichen 13, 14 des Deformierkonus 1 zugeordnet sind. So kommen beim Einpressen des Deformierkonus 1 in das Ende des Deformationsrohrs 2 die Laschen 11 auf entsprechenden rampenartigen Bereichen 13 des Deformierkonus 1 zu liegen, wodurch diese Laschen 11 den rampenartigen Bereichen 13 entsprechend nach außen gebogen und trichterförmig aufgeweitet werden. Die zwischen den nach außen gebogen Laschen 11 angeordneten weiteren Laschen 12 behalten jedoch ihre ursprüngliche Ausrichtung bei und kommen in entsprechende Längsausnehmungen bzw. Vertiefungen des trichterförmigen Bereichs des Deformierkonus 1 zu liegen, die zwischen jeweils zwei rampenförmigen Bereichen 13 bzw. zwischen jeweils zwei Kanten 8 angeordnet sind.

Dies bedeutet mit anderen Worten, dass die am Ende des Deformationsrohrs 2 gebildeten Laschen 11, 12 abwechselnd nach außen gebogen werden bzw. unverformt bleiben, wodurch die Längskanten 9 dieser Laschen 11, 12 freigelegt werden. Die Kanten 9 der nicht verformten Laschen 12 bilden sodann mit den am Deformierkonus 1 angeordneten Kanten 8, deren Abstand voneinander der Breite der Laschen 12 entspricht, die formschlüssige torsionsfeste Verbindung zwischen Deformierkonus 1 und Deformationsrohr 2.

Ähnlich wie bei der in Figur 1 und 2 gezeigten Ausführungsform weist der Deformierkonus 1 der Ausführungsform gemäß Figur 3 und 4 ebenfalls einen im wesentlichen trompetenförmigen bzw. torusförmigen Verlauf im Außenbereich auf. Dieser ist bei der Ausführungsform gemäß Figur 3 und 4 jedoch in einzelne Flächenbereiche aufgelöst, wobei die Bereiche 14 für die Verformung der bereits vorverformten Laschen 11 des Deformationsrohrs 2 und die Rampen 15 für die Verformung der zunächst noch geraden Laschen 12 des Deformationsrohrs 2 zuständig sind.

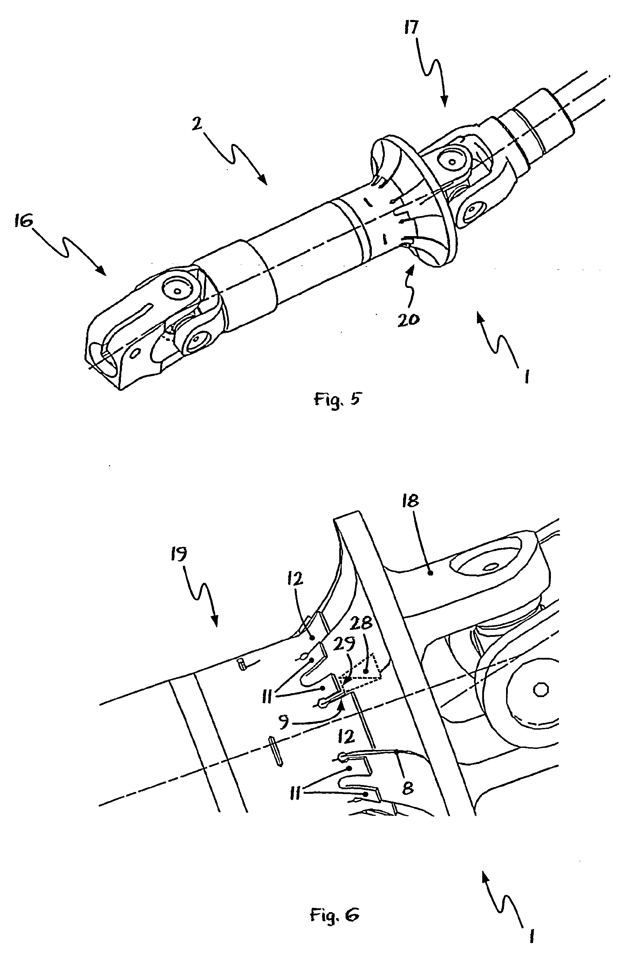

In den Figuren 5 und 6 ist eine Ausführungsform einer Deformationsanordnung gemäß der vorliegenden Erfindung dargestellt, die sich insbesondere zum Einsatz im Bereich einer Lenkzwischenwelle eignet. Man erkennt die durch zwei Kardangelenke 16, 17 begrenzte, gleichzeitig das Deformationsrohr 2 bildende Lenkzwischenwelle, wobei sich am zeichnungsbezogen linken Kardangelenk 16 beispielsweise das Lenkgetriebe, und am zeichnungsbezogen rechten Kardangelenk 17 beispielsweise die obere Lenksäule anschließt.

Ferner erkennt man in den Figuren 5 und 6 den mit einer Gelenkgabel 18 des Kardangelenks 17 zu einer Einheit zusammengefassten Deformierkonus 1, der wiederum mit einem im wesentlichen zylindrischen Bereich 19 in das Ende des gleichzeitig die Lenkzwischenwelle bildenden Deformationsrohrs 2 eingepresst ist. Zur Übertragung hoher Drehmomente, zu denen in diesem Fall insbesondere auch Lenkmomente gehören können, ist das konusseitige Ende der Lenkzwischenwelle in eine Vielzahl von in Längsrichtung der Lenkzwischenwelle verlaufenden Laschen 11, 12 aufgelöst.

Die Kanten 9 dieser Laschen 11, 12 greifen in formkorrespondierende Kanten 8 am Deformierkonus 1 ein, die durch eine im Querschnitt treppen- bzw. rechteckförmige Struktur 20 aus abwechselnden Erhebungen und Vertiefungen im Deformierkonus 1 gebildet werden. Auf diese Weise lässt sich die Übertragung hoher Drehmomente sicher gewährleisten, während die Struktur der Laschen 11, 12 des Deformationsrohrs 2 und die zugeordneten Kanten 8 des Deformierkonus 1 gleichzeitig für eine sichere und definierte Verformung und Auftrennung des Deformationsrohrs 2 im Crashfall sorgen.

An Stelle oder zusätzlich zu der durch die treppen- bzw. rechteckförmige Struktur 20 des Deformierkonus 1 gebildeten Kanten 8 kann der Deformierkonus 1 auch am Grund des trompetenförmigen Bereichs bzw. im Überlappungsbereich mit den Laschen 11, 12 des Deformationsrohrs 2 angeordnete, hier strichliert dargestellte Aufsätze bzw. Erhebungen 28 umfassen, die zusätzlich mit Schneiden 29 ausgerüstet sein können. Durch den Eingriff der Kanten bzw. Schneiden 29 solcher im wesentlichen in radialer Richtung verlaufenden Aufsätze 28 lässt sich sowohl hohes Drehmoment übertragen, als auch das kontrollierte Auftrennen des Deformationsrohrs 2 im Crashfall besonders gut unterstützen.

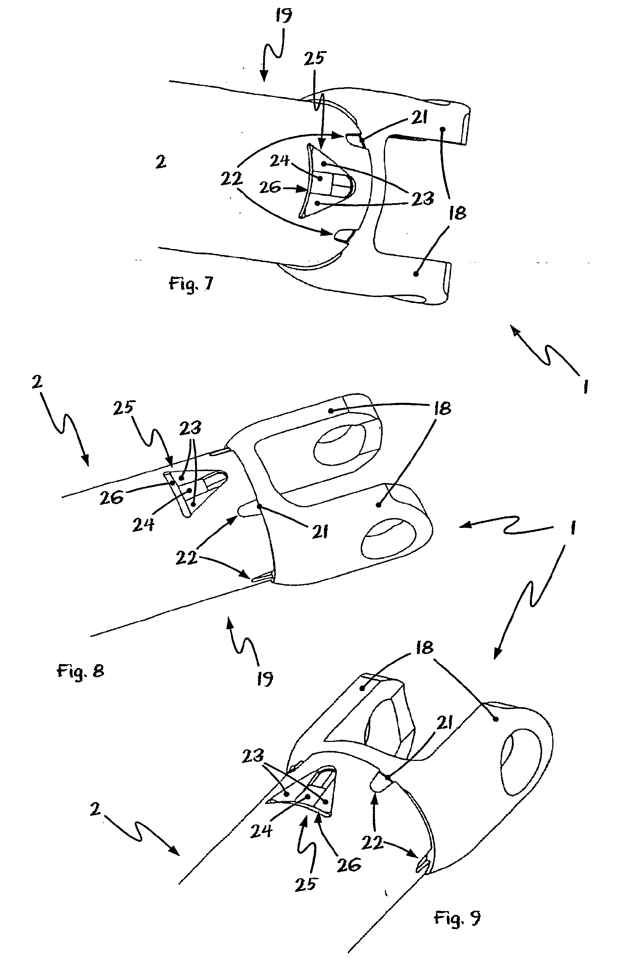

Die Figuren 7 bis 9 zeigen in verschiedenen Ansichten eine weitere Ausführungsform einer aus Deformierkonus 1 und Deformationsrohr 2 bestehenden Deformationsanordnung. Bei dieser Ausführungsform wurde auf große Teile des trompetenförmigen Bereichs des Deformierkonus 1 verzichtet, wodurch hier im wesentlichen lediglich die umlaufende Begrenzungskante 21 zwischen Gelenkgabel 18 und zylindrischem Bereich 19 des Deformierkonus 1, sowie die sich daran anschließenden Schultern der Gelenkgabel 18, für die Aufweitung und Verformung des Deformationsrohrs 2 im Crashfall zuständig sind. Diese Aufweitung und Verformung des Deformationsrohrs 2 wird durch die schlitzförmigen Ausnehmungen 22 am Ende des Deformationsrohrs 2 unterstützt.

Bei der in Figuren 7 bis 9 dargestellten Ausführungsform wird die Aufgabe der Übertragung hoher Drehmomente durch eine Kombination aus abgekanteten Laschen 23 mit zu den Kanten dieser Laschen formkorrespondierenden Konturen 24 am zylindrischen Teil des Deformierkonus 1 erfüllt. Die abgekanteten Laschen 23 des Deformationsrohrs 2 sind am Innenumfang von Ausklinkungen 25 im Endbereich des Deformationsrohrs 2 angeordnet. Die mit den Kanten dieser Laschen 23 formkorrespondierenden Konturen 24 am Deformierkonus 1 werden durch kleine, etwa quaderförmige Erhebungen 24, die ihrerseits wiederum in Ausnehmungen angeordnet sind, im zylindrischen Bereich 19 des Deformierkonus 1 gebildet.

Diese Ausführungsform verbindet den Vorteil einer äußerst einfachen und damit kostengünstigen Gestaltung mit der zusätzlichen Möglichkeit einer Sicherung gegen axiales Herausziehen des Deformierkonus 1 bzw. der Gelenkgabel 18 aus dem Ende des Deformationsrohrs 2 bzw. der Lenkzwischenwelle. Hierzu weist der Deformierkonus 1 bzw. die Gelenkgabel 18 in ihrem zylindrischen Bereich zusätzlich in Umfangsrichtung verlaufende Erhebungen bzw. Kanten 26 auf, die mit weiteren, ebenfalls durch die Einprägungen in Form abgekanteter Laschen 23 gebildeten Kanten des Deformationsrohrs 2 in formschlüssigem Eingriff stehen.

Dies bedeutet mit anderen Worten, dass sich Deformierkonus 1 bzw. Gelenkgabel 18 sowie Deformationsrohr 2 bzw. Lenkzwischenwelle bei dieser Ausführungsform im wesentlichen mittels einer kombinierten Press- und Schnappverbindung montieren lassen. Dabei verbindet diese kombinierte Press- und Schnappverbindung in vorteilhafter und kostensparender Weise die Aufgaben der Übertragung hoher Drehmomente und der Dissipation mechanischer Energie im Crashfall.

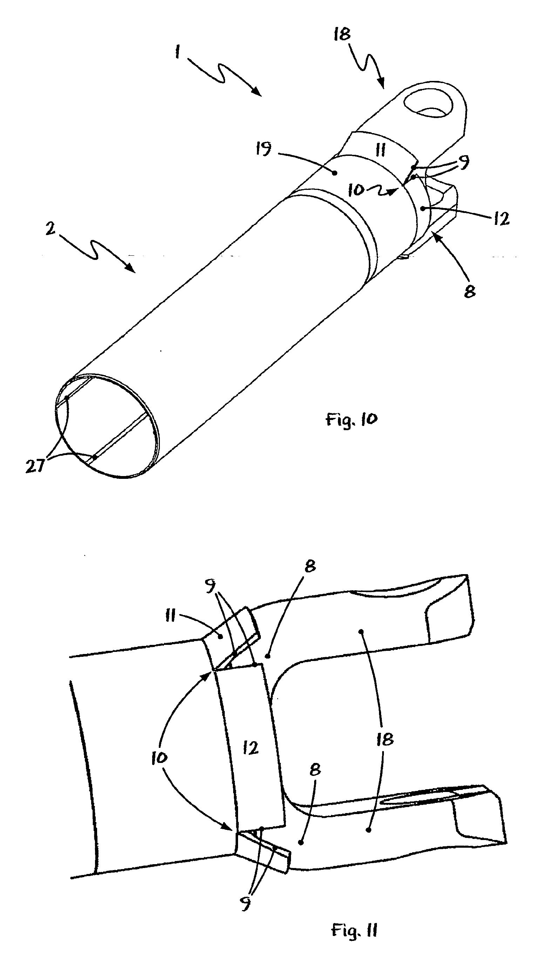

Figur 10 und 11 zeigen eine weitere Ausführungsform einer Deformationsanordnung. Man erkennt zunächst den als Gabel 18 eines Kardangelenks, beispielsweise für eine Lenkzwischenwelle 2, ausgeführten Deformierkonus 1 sowie ein Deformationsrohr 2, das im Bereich 19 mit einem im wesentlichen zylindrischen Fortsatz der Gelenkgabel 18 bzw. des Deformierkonus 1 verpresst ist.

Die auch bei dieser Ausführungsform bezüglich Torsion vorhandene formschlüssige Verbindung zwischen Gelenkgabel 18 und Lenkzwischenwelle 2 wird wiederum durch das Zusammenwirken von als Schneiden ausgebildeten Kanten 9 rohrendseitiger kurzer Ausnehmungen 10 in Form von Einschnitten in die Lenkzwischenwelle 2 sowie diesen Kanten 9 zugeordneter Gegenkanten bzw. Anschlagsflächen 8 an der Gelenkgabel 18 gebildet. Die Kanten 9 der Einschnitte 10 in das Deformationsrohr 2 sind zum Zweck des Eingriffs durch die Gelenkgabel 18 wiederum dadurch freigelegt, dass die durch jeweils zwei benachbarte Einschnitte 10 definierte Laschen 11, 12 am Ende der Lenkzwischenwelle 2 abwechselnd nach außen abgewinkelt (11) bzw. abwechselnd nicht verformt werden (12).

Die aufweitende Wirkung der Gelenkgabel 18 als Deformierkonus 1, die bei einem Crashfall zum Tragen kommt, wird auch bei dieser Ausführungsform durch die beiden schrägen Außenschultern der Gelenkgabel 18 übernommen. Im Crashfall werden Gelenkgabel 18 und Lenkzwischenwelle 2 aufeinander zu geschoben und das gelenkseitige Ende der Lenkzwischenwelle 2 wird durch die Schultern der Gelenkgabel 18 zunächst aufgeweitet und schließlich in vier einzelne Streifen aufgerissen.

Um das kontrollierte und definierte Verformen und Aufreißen der Lenkzwischenwelle 2 im Crashfall zu unterstützen, weist die Lenkzwischenwelle 2 rohrinnenseitig in Längsrichtung verlaufende nutenartige Materialschwächungen 27 auf, die am Grund der rohrendseitigen Einschnitte 10 der Lenkzwischenwelle 2 münden.

Nach dem Gesagten wird im Ergebnis deutlich, dass dank der Erfindung der Aufbau von Deformationsanordnungen, insbesondere für Lenkstränge von Kraftfahrzeugen, wesentlich vereinfacht werden kann. Dabei lässt sich gleichzeitig sowohl die Sicherheit so ausgerüsteter Lenkstränge im Betrieb als auch die Reproduzierbarkeit des Verhaltens des Lenkstrangs im Crashfall erheblich verbessern, wobei die erfindungsgemäße Deformationsanordnung gleichzeitig energieverzehrendes und drehmomentübertragendes Element des Lenkstrangs sein kann. Trotz der durch die Erfindung ermöglichten Qualitätsverbesserung am Produkt werden dank der Erfindung gleichzeitig beträchtliche Vereinfachungen und Kosteneinsparungen bei der Herstellung von Lenksträngen für Kraftfahrzeuge erzielt.

### Bezugszeichenliste

- 1: Deformierkonus
- 2: Deformationsrohr
- 3: pyramidenstumpfförmiger Bereich
- 4: prismenförmige Ausnehmungen
- 5: Lenkwelle
- 6: zylindrischer Bereich
- 7: Trompeten- oder Torusform
- 8: Kante
- 9: Kante
- 10: Ausnehmung
- 11: Lasche
- 12: Lasche
- 13: Bereich
- 14: Bereich
- 15: Rampen
- 16: Kardangelenk
- 17: Kardangelenk
- 18: Gelenkgabel
- 19: zylindrischer Bereich
- 20: rechteckförmige Struktur
- 21: Begrenzungskante
- 22: schlitzförmige Ausnehmung
- 23: Einprägung
- 24: Erhebung
- 25: Einprägung
- 26: Kanten
- 27: Ausnehmung (Materialschwächung)
- 28: Erhebung
- 29: Schneide

## Patentansprüche

1. Deformationsanordnung, insbesondere für die Lenksäule eines Kraftfahrzeugs, die Deformationsanordnung umfassend ein zumindest an einem Ende definiert verformbares Deformationsrohr (2) sowie einen dem verformbaren Ende des Deformationsrohrs (2) zugeordneten Deformierkonus (1), wobei der Deformierkonus (1) teilweise in das Ende des Deformationsrohrs (2) kraftschlüssig eingepresst ist,
**dadurch gekennzeichnet,**
**dass** der Deformierkonus (1) zumindest eine im wesentlichen entlang seiner Mantellinien angeordnete Erhebung (13, 28) bzw. Ausnehmung aufweist, deren Kanten (8) mit Kanten (9) zumindest einer zur Konuserhebung bzw. Konusausnehmung formkorrespondierenden Einprägung (23, 25) bzw. zur Konuserhebung bzw. Konusausnehmung formkorrespondierenden Ausnehmung (10) am konusseitigen Ende des Deformationsrohrs (2) in formschlüssigem Eingriff stehen, wobei die Kanten (8) der entlang der Mantellinie des Deformationskonus (1) angeordneten Erhebung (13, 28) als eine das Deformationsrohr (2) im Crashfall auftrennende Schneide ausbildet sind.

2. Deformationsanordnung nach Anspruch 1,
**dadurch gekennzeichnet,**
**dass** die Erhebungen des Deformierkonus (1) durch einen *n*-seitigen pyramidenstumpfförmigen Bereich (3) des Deformierkonus (1) gebildet sind.

3. Deformationsanordnung nach Anspruch 1 oder 2,
**dadurch gekennzeichnet,**
**dass** die zu den Kanten (8) der Erhebungen (13) des Deformierkonus (1) formkorrespondierenden Kanten (9) des Deformationsrohrs (2) durch nutenförmige, am Innenumfang des Deformationsrohrs (2) in Längsrichtung angeordnete Ausnehmungen (27) gebildet sind.

4. Deformationsanordnung nach einem der Ansprüche 1 bis 3,
**dadurch gekennzeichnet,**
**dass** die zu den Kanten (8) der Erhebungen (13) des Deformierkonus (1) formkorrespondierenden Kanten (9) des Deformationsrohrs (2) durch vor einem endseitigen Aufweiten in das Deformationsrohr (2) eingebrachte, entlang von Mantellinien des Deformationsrohrs (2) verlaufende kurze Einschnitte (10) in das Deformationsrohr (2) gebildet sind.

5. Deformationsanordnung nach einem der Ansprüche 1 bis 4,
**dadurch gekennzeichnet,**
**dass** die zu Kanten (8) von Erhebungen (13) bzw. Ausnehmungen des Deformierkonus (1) formkorrespondierenden Kanten (9) des Deformationsrohrs (2) durch abgekantete Laschen (23) im Bereich zumindest einer endseitigen Ausklinkung (25) des Deformationsrohrs (2) gebildet sind.

6. Deformationsanordnung nach einem der Ansprüche 1 bis 5,
**dadurch gekennzeichnet,**
**dass** der Deformierkonus (1) eine sich trompetenförmig oder torusförmig erweiternde Form (7) zur exakten Steuerung der Verformung des Deformationsrohrs (2) aufweist.

7. Deformationsanordnung nach einem der Ansprüche 1 bis 6,
**dadurch gekennzeichnet,**
**dass** der Deformierkonus (1) einen Lagersitz zur Aufnahme einer Lagerung für eine Lenkwelle (5) umfasst.

8. Deformationsanordnung nach einem der Ansprüche 1 bis 7,
**dadurch gekennzeichnet,**
**dass** der Deformierkonus (1) eine Gelenkgabel (18) eines Kardangelenks (16, 17) der Lenkwelle umfasst.

9. Deformationsanordnung nach einem der Ansprüche 1 bis 8,
**dadurch gekennzeichnet,**
**dass** der Deformierkonus (1) Teil des Lenkrades ist bzw. mit dem Lenkrad drehfest verbunden ist, wobei das Deformationsrohr (2) einen Teil einer Lenkwelle bildet.

10. Deformationsanordnung nach einem der Ansprüche 1 bis 9,
**dadurch gekennzeichnet,**
**dass** die Erhebungen des Deformierkonus (1) Erhebungen oder Aufsätze (28) mit im wesentlichen in konusradialer Richtung verlaufenden Kanten umfassen.

11. Deformationsanordnung nach einem der Ansprüche 1 bis 9,
**dadurch gekennzeichnet,**
**dass** die Erhebungen des Deformierkonus (1) Aufsätze (28) mit im wesentlichen in konusradialer Richtung verlaufenden schneidenförmigen Bereichen (19) umfassen.

## Claims

1. Deformation arrangement, in particular for the steering column of a motor vehicle, the deformation arrangement comprising a deformation tube (2), which is deformable in a defined manner at least at one end, as well as a deforming cone (1) that is associated with the deformable end of the deformation tube (2), wherein the deforming cone (1) is partially pressed non-positively into the end of the deformation tube (2),
**characterized in**
**that** the deforming cone (1) has at least one protuberance (13, 28) and/or recess, which is disposed substantially along the surface lines of the deforming cone (1) and the edges (8) of which are in positive engagement with edges (9) of at least one impression (23, 25) and/or recess (10) corresponding in shape to the cone protuberance and/or cone recess at the cone-side end of the deformation tube (2), wherein the edges (8) of the protuberance (13, 28) disposed along the surface line of the deformation cone (1) are designed as a cutting edge that cuts the deformation tube (2) in the event of a crash.

2. Deformation arrangement according to claim 1,
**characterized in**
**that** the protuberances of the deforming cone (1) are formed by an n-sided truncated-pyramid-shaped region (3) of the deforming cone (1).

3. Deformation arrangement according to claim 1 or 2,
**characterized in**
**that** the edges (9) of the deformation tube (2) that correspond in shape to the edges (8) of the protuberances (13) of the deforming cone (1) are formed by groove-shaped recesses (27) disposed in longitudinal direction on the inner periphery of the deformation tube (2).

4. Deformation arrangement according to one of claims 1 to 3,
**characterized in**
**that** the edges (9) of the deformation tube (2) that correspond in shape to the edges (8) of the protuberances (13) of the deforming cone (1) are formed by short nicks (10) in the deformation tube (2), which are introduced into the deformation tube (2) prior to widening of an end and extend along surface lines of the deformation tube (2).

5. Deformation arrangement according to one of claims 1 to 4,
**characterized in**
**that** the edges (9) of the deformation tube (2) that correspond in shape to the edges (8) of protuberances (13) and/or recesses of the deforming cone (1) are formed by angled lugs (23) in the region of at least one end notch (25) of the deformation tube (2).

6. Deformation arrangement according to one of claims 1 to 5,
**characterized in**
**that** the deforming cone (1) for exact control of the deformation of the deformation tube (2) has a shape (7) that widens in a trumpet-like or toroidal manner.

7. Deformation arrangement according to one of claims 1 to 6,
**characterized in**
**that** the deforming cone (1) comprises a bearing seat for receiving a bearing arrangement for a steering shaft (5).

8. Deformation arrangement according to one of claims 1 to 7,
**characterized in**
**that** the deforming cone (1) comprises a joint yoke (18) of a universal joint (16, 17) of the steering shaft.

9. Deformation arrangement according to one of claims 1 to 8,
**characterized in**
**that** the deforming cone (1) is part of the steering wheel and/or is connected in a rotationally fixed manner to the steering wheel, wherein the deformation tube (2) forms part of a steering shaft.

10. Deformation arrangement according to one of claims 1 to 9,
**characterized in**
**that** the protuberances of the deforming cone (1) comprise protuberances or attachments (28) having edges extending substantially in radial direction of the cone.

11. Deformation arrangement according to one of claims 1 to 9,
**characterized in**
**that** the protuberances of the deforming cone (1) comprises attachments (28) having cutting-edge-shaped regions (19) extending substantially in radial direction of the cone.

## Revendications

1. Dispositif de déformation, en particulier pour la colonne de direction d'un véhicule automobile, le dispositif de déformation comprenant un tube de déformation (2) déformable de manière définie au moins à une extrémité, ainsi qu'un cône de déformation (1) associé à l'extrémité déformable du tube de déformation (2), le cône de déformation (1) étant enfoncé à force en partie dans l'extrémité du tube de déformation (2),
**caractérisé**
**en ce que** le cône de déformation (1) présente au moins un relief (13, 28) ou évidement disposé sensiblement le long de ses génératrices, dont les bords (8) sont en prise par complémentarité de forme avec des bords (9) d'au moins un enfoncement (23, 25) dont la forme correspond au relief de cône ou à l'évidement de cône, ou évidement (10) dont la forme correspond au relief de cône ou évidement de cône, à l'extrémité côté cône du tube de déformation (2), les bords (8) du relief (13, 28), disposés le long de la génératrice du cône de déformation (1), étant réalisés sous la forme d'un tranchant sectionnant le tube de déformation (2) en cas de collision.

2. Dispositif de déformation selon la revendication 1,
**caractérisé**
**en ce que** les reliefs du cône de déformation (1) sont formés par une zone (3) en forme de tronc de cône à n faces, du cône de déformation (1).

3. Dispositif de déformation selon la revendication 1 ou 2,
**caractérisé**
**en ce que** les bords (9), correspondant aux bords (8) du relief (13) du cône de déformation (1), du tube de déformation (2), sont formés par des évidements (27) en forme de rainure, disposés sur le pourtour intérieur du tube de déformation (2) dans la direction longitudinale.

4. Dispositif de déformation selon l'une quelconque des revendications 1 à 3,
**caractérisé**
**en ce que** les bords (9), dont la forme correspond aux bords (8) des reliefs (13) du cône de déformation (1), du tube de déformation (2), sont formés par de courtes entailles (10) du tube de déformation (2), pratiquées en amont d'un élargissement côté extrémité du tube de déformation (2), et s'étendant le long de directrices du tube de déformation (2).

5. Dispositif de déformation selon l'une quelconque des revendications 1 à 4,
**caractérisé**
**en ce que** les bords (9) du tube de déformation (2), dont la forme correspond aux arêtes (8) des reliefs (13) ou des évidements du cône de déformation (1), sont formés par des pattes (23) repliées, dans la zone d'au moins une encoche (25) terminale du tube de déformation (2).

6. Dispositif de déformation selon l'une quelconque des revendications 1 à 5,
**caractérisé**
**en ce que** le cône de déformation (1) présente une forme (7) s'élargissant en trompette ou en tore pour la commande précise de la déformation du tube de déformation (2).

7. Dispositif de déformation selon l'une quelconque des revendications 1 à 6,
**caractérisé**
**en ce que** le cône de déformation (1) comprend un siège pour recevoir un support d'un arbre de direction (5).

8. Dispositif de déformation selon l'une quelconque des revendications 1 à 7,
**caractérisé**
**en ce que** le cône de déformation (1) comprend une fourche d'articulation (18) d'un joint de cardan (16, 17) de l'arbre de direction.

9. Dispositif de déformation selon l'une quelconque des revendications 1 à 8,
**caractérisé**
**en ce que** le cône de déformation (1) fait partie du volant ou est relié de manière solidaire en rotation au volant, le tube de déformation (2) formant une partie d'un arbre de direction.

10. Dispositif de déformation selon l'une quelconque des revendications 1 à 9,
**caractérisé**
**en ce que** les reliefs du cône de déformation (1) comprennent des reliefs ou des pièces rapportées (28) avec des bords s'étendant sensiblement dans la direction radiale du cône.

11. Dispositif de déformation selon l'une quelconque des revendications 1 à 9,
**caractérisé**
**en ce que** les reliefs du cône de déformation (1) comprennent des pièces rapportées (28) avec des zones (19) en forme de lame s'étendant sensiblement dans la direction radiale du cône.
